# EUROPÄISCHE PATENTSCHRIFT

(11) **EP 2 096 007 B1**
(45) Veröffentlichungstag und Bekanntmachung des Hinweises auf die Patenterteilung: **25.05.2011**
(21) Anmeldenummer: 09002388.8
(22) Anmeldetag: 20.02.2009
(51) Int. Cl.: B60R 21/34, E05B 65/19

(54) **Fußgängerschutzeinrichtung an der Frontklappe eines Kraftfahrzeugs**
Pedestrian protection device at the front bonnet of a motor vehicle
Dispositif de protection de piétons au capot avant d'un véhicule automobile

(30) Priorität: 01.03.2008 DE 102008012048
(43) Veröffentlichungstag der Anmeldung: 02.09.2009
(73) Patentinhaber: Bayerische Motoren Werke Aktiengesellschaft, 80809 München (DE); BÖCO Böddecker & Co. GmbH & Co. KG, 42327 Wuppertal (DE)
(72) Erfinder: Drexl, Thomas, 80801 München (DE); Kammler, Michael, 58285 Gevelsberg (DE); Köstler, Ulrich, 85241 Hebertshausen (DE); Johann, Henrik, 42929 Wermelskirchen (DE)

(56) Entgegenhaltungen:
- EP-A- 1 818 224
- DE-A1-102004 023 729
- DE-A1-102005 016 324
- DE-A1-102005 035 006
- DE-A1-102005 045 354
- DE-A1-102005 060 750
- DE-B3-102005 048 328
- DE-B3-102006 012 090

## Beschreibung

Die Erfindung betrifft eine Fußgängerschutzeinrichtung an der Frontklappe eines Kraftfahrzeugs, mit den im Oberbegriff des Patentanspruches 1 angegebenen Merkmalen.

Eine derartige Fußgängerschutzeinrichtung sieht in der DE 10 2005 035 006 A1 vor, dass eine geschlossene Fronthaube eines Kraftfahrzeugs beispielsweise in einer Fußgänger-Unfall-Situation von einem insbesondere pyrotechnischen Aktorelement in eine erhöhte Schutzlage anhebbar ist. Das Aktorelement weist hierzu einen in einem Hohlraum eines Zylinders axial verstellbaren Kolben auf, der an einer Stirnseite mit einer Kolbenstange verbunden ist, die mit ihrem durch eine axiale Öffnung im Zylinder nach außen ragenden Endbereich einen Schlossträger in eine der Schutzlage entsprechende Winkellage verstellen kann. An dem Schlossträger sind Schlossteile vorgesehen, die bei dem Hochstellen der Fronthaube in die Schutzlage die Fronthaube an dem schwenkbaren Schlossträger fixieren. Mit dieser Vorrichtung soll eine Dämpfung oder gar Verhinderung eines Rückschwingens der Fronthaube nach Durchführung des Aufstellvorganges vor einem Aufprall eines Fußgängers auf die Fronthaube möglich sein. Das durch das Aktorelement bewirkte Hochstellen der Fronthaube in die Schutzlage dürfte schlagartig erfolgen. Dies kann zu einem entsprechenden Überschwingen der Frontklappe über die Schutzlage hinaus und einem nachfolgenden Einschwingen auf die Schutzlage führen, wenn kein Anschlag vorgesehen ist, der die Schutzlage begrenzt. Bei Verwendung eines die Schutzlage begrenzenden Anschlags kann die an dem Anschlag schlagartig zur Anlage kommende Frontklappe unter die Schutzlage zurück prallen, die sich dann in einer Höhenlage befindet, in dem ein Aufprall eines Fußgängers auf die Frontklappe nicht optimal abgefangen werden kann.

Eine derartige Rückbewegung der Fronthaube unter die Schutzlage soll über ein etwa am oberen Wegende des Kolbens in einer radialen Auslassöffnung des Zylinders angeordnetes Ventil verhindert sein, das von der axialen Stellung des Kolbens abhängig geöffnet oder geschlossen ist. Dabei soll das Ventil zur Entlüftung der Arbeitskammer des Zylinders in anderer Weise erst bei der nach unten gerichteten Rückbewegung der in die Schutzlage hochgestellten Fronthaube geöffnet werden. Hierzu ist weiter ausgeführt, dass die Sperrstellung des Ventils soll so lange aufrecht erhalten bleiben soll, bis der Fußgänger auf die Fronthaube aufprallt. Der Fußgänger muss somit bei seinem Aufprall auf die Fronthaube die Kolbenstange und den damit verbundenen Kolben gegen den Gasdruck im Arbeitsraum des Zylinders verstellen, damit das Ventil öffnet. Bei dem unfallbedingten Aufprall des Fußgängers auf die Fronthaube ist somit die Fronthaube anfangs gegen den erhöhten Widerstand des Aktorelements zu verstellen, bevor das Ventil öffnet und ein leichteres Verstellen der Kolbenstange und des damit verbundenen Kolbens ermöglicht. Dies belastet den aufprallenden Fußgänger zusätzlich.

Die Schutzeinrichtung der DE 10 2005 048 328 B3 sieht zur Realisierung eines Personenschutzes beispielsweise an einer Fronthaube eines Kraftfahrzeugs ein mit Schüttgut befülltes Dämpfungsglied vor, das eine zu beschleunigende träge Masse bildet, die den Rückpralleffekt der in die Schutzlage angehobenen Fronthaube aufheben oder zumindest deutlich reduzieren soll. Das Gewicht des Schüttgutes erschwert die Fronthaube, wodurch der Treibstoffverbauch des Kraftfahrzeugs insbesondere bei Beschleunigungsvorgängen entsprechend erhöht ist. Das Schüttgut muss Bewegungen ausführen können und dürfte deshalb in einem von dem Schüttgut nicht ganz gefüllten Hohlraum angeordnet sein. Dadurch dürfte das Schüttgut auch im normalen Fahrbetrieb Bewegungen ausführen, die unangenehme Geräusche verursachen dürften.

Bei der in der EP 1 818 224 A1 verwendeten Fußgängerschutzeinrichtung kann die Fronthaube vor einem Aufprall eines Fußgängers von einem Aktuator in eine erhöhte Schutzlage hochgestellt werden. Aus kinematischen Gründen ist durch eine Zapfen-/Langlochverbindung ein bewegliches Schwenkgelenk gebildet, das beim Hochstellen der Fronthaube in die Schutzlage eine Verstellbewegung des Zapfens der Zapfen-/Langlochverbindung in dem Langloch der Zapfen-/Langlochverbindung ermöglicht. Um oszillierende Bewegungen der Fronthaube beim Hochstellen in die Schutzlage zu vermeiden ist bei einer Ausführung in dem Langloch ein elastisches Element angeordnet, das von dem Zapfen komprimiert wird und dabei energievernichtend wirken soll. Das elastisch deformierbare Element dürfte jedoch oszillierende Bewegungen der Fronthaube um die Schutzlage nur unzureichend dämpfen. Alternativ kann in dem Langloch eine verengendes Brückenteil angeordnet sein, das beim Hochstellen der Fronthaube in die Schutzlage Energie vernichtend verformt wird. Das Brückenteil ist bezüglich seiner Festigkeit und Geometrie genau auf das Aktorelement abzustimmen, damit ein Hochstellen der Fronthaube in die Schutzlage von dem Brückenteil nicht verhindert ist und andererseits die Fronthaube nicht unter die Schutzlage zurück prallt. Ein Zurückprallen der Frontklappe aus der Schutzlage in Richtung der Schließlage dürfte das einmal verformte Brückenteil nicht oder kaum verhindern, das nach einer erstmaligen Verformung auch oszillierende Bewegungen der Frontklappe nicht oder kaum verhindern dürfte.

Der Erfindung liegt die Aufgabe zu Grunde, eine Fußgängerschutzeinrichtung mit den Merkmalen im Oberbegriff des Patentanspruches 1 anzugeben, die ein günstigeres und schnelleres Einschwingen der Frontklappe in die Schutzlage ermöglicht und bei dem Einschwingen ein wesentliches Unterschreiten der Schutzlage verhindern kann, wenn die Frontklappe die Schutzlage bereits erreicht hatte.

Diese Aufgabe ist durch die Merkmale im Patentanspruch 1 gelöst. Vorteilhafte Ausgestaltungen der Erfindung sind den Unteransprüchen entnehmbar.

Die an der Frontklappe eines Kraftfahrzeugs vorgesehene Fußgängerschutzeinrichtung weist einen Sensor auf, der einen Zusammenstoß eines Objekts, beispielsweise eines Fußgängers, mit dem Kraftfahrzeug erfassen kann und dann ein Signal an eine Einrichtung weiter leitet. Die Einrichtung oder eine damit verbundene andere Einrichtung stellt dann den hinteren und/oder vorderen Bereich der Frontklappe nach oben in eine Schutzlage aus, in der die Frontklappe in vertikaler Richtung nach unten elastisch und/oder gedämpft nachgeben kann. Die Bewegung der Frontklappe in die Schutzlage ist zumindest in einem Verstellbereich vor dem Erreichen der Schutzlage von einer Brems- und/oder Dämpfungseinrichtung abgebremst und/oder gedämpft. Bei dem Einschwingen der Frontklappe auf die Schutzlage wird dadurch eine wesentliches Überschwingen und Unterschwingen bezüglich der Schutzlage vermieden. Ein Überschwingen der Frontklappe über die Schutzlage nach oben hinaus kann durch einen karosseriefesten, beispielsweise mit dem Schlossträger zusammen wirkenden Anschlag verhindert sein, der in der Schutzlage oder in einer etwas höheren Lage der Frontklappe bzw. des Schlossträgers wirksam ist.

Drei Ausführungsbeispiele der Erfindung werden an Hand einer Zeichnung näher erläutert. Es zeigen
- Fig. 1: ein erstes Ausführungsbeispiel einer Fußgängerschutzeinrichtung in einem vereinfachten Querschnitt durch eine Einrichtung, die einen hinteren oder vorderen Bereich einer geschlossenen und von einem Frontklappenschloss verriegelten Frontklappe eines Kraftfahrzeugs nach oben in eine Schutzla- ge ausstellen kann,
- Fig. 2: die den Figuren 1 bis 4 entsprechende Einrichtung nach der durch einen Aktuator bewirkten Entriegelung des Schlossträgers,
- Fig. 3: die den Figuren 1 bis 4 entsprechende Einrichtung in einer Ansicht, in der ein an der Karosserie des Kraftfahrzeugs schwenkbar angeordneter Brems- und Dämpfungshebel wirksam ist,
- Fig. 4: die den Figuren 1 bis 4 entsprechende Einrichtung bei in die Hochlage an- gehobenem Schlossträger,
- Fig. 5: ein zweites Ausführungsbeispiel einer Fußgängerschutzeinrichtung in ei- nem Fig. 1 entsprechenden Querschnitt, wobei die Einrichtung einen an dem schwenkbaren Schlossträger schwenkbaren Brems- und Dämpfungs- hebel aufweist,
- Fig. 6: die den Figuren 5 bis 9 entsprechende Einrichtung nach der durch einen Aktuator bewirkten Entriegelung und Hochstellung des Schlossträgers in die Hochlage,
- Fig. 7: die den Figuren 5 bis 9 entsprechende Einrichtung in einer Ansicht, in der ein an dem Schlossträger schwenkbar angeordneter Brems- und Dämp- fungshebel wirksam ist,
- Fig. 8: die den Figuren 5 bis 9 entsprechende Einrichtung in einer Fig. 7 entspre- chenden Ansicht, in der eine ortsfeste Stützschulter noch mit dem Brems- und Dämpfungshebel zusammen wirkt,
- Fig. 9: die den Figuren 5 bis 9 entsprechende Einrichtung bei in die Hochlage an- gehobenem Schlossträger,
- Fig. 10: ein drittes Ausführungsbeispiel einer Fußgängerschutzeinrichtung in einem den Figuren 1 und 5 entsprechenden Querschnitt, wobei die Einrichtung ei- nen an dem schwenkbaren Schlossträger schwenkbaren Bremshebel auf- weist,
- Fig. 11: die den Figuren 10 bis 13 entsprechende Einrichtung nach der durch einen Aktuator bewirkten Entriegelung und Hochstellung des Schlossträgers in die Hochlage,
- Fig. 12: die den Figuren 10 bis 13 entsprechende Einrichtung in einer Ansicht, in der ein an dem Schlossträger schwenkbar angeordneter Bremshebel wirk- sam ist,
- Fig. 13: die den Figuren 10 bis 13 entsprechende Einrichtung bei in die Hochlage angehobenem Schlossträger.

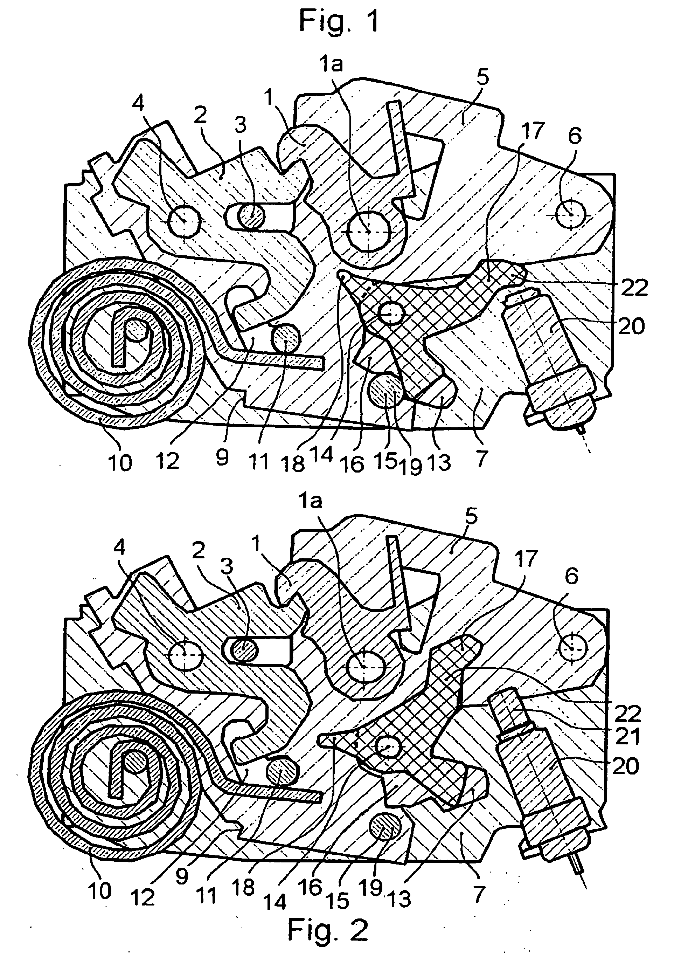

Die in Figur 1 in einer vereinfachten Prinzipskizze dargestellte Einrichtung einer Fußgängerschutzeinrichtung ist im vorderen und/oder hinteren Bereich einer nicht dargestellten Frontklappe eines Kraftfahrzeugs beispielsweise seitlich oder mittig angeordnet.

Die Fußgängerschutzeinrichtung weist wenigstens einen, in den Figuren ebenfalls nicht dargestellten Sensor auf, der einen Zusammenstoß eines Objekts, beispielsweise eines Fußgängers, mit dem Kraftfahrzeug erfassen kann und dann ein Signal an die Einrichtung weiter leitet, die den hinteren und/oder vorderen Bereich der Frontklappe nach oben in eine Schutzlage ausstellt, in der die Frontklappe in vertikaler Richtung nach unten elastisch und/oder gedämpft abgestützt ist.

Die Hochstellbewegung der Frontklappe in die Schutzlage erfolgt über das von der Einrichtung höhenverstellbare Frontklappenschloss, das die Frontklappe dabei ständig verriegelt hält. Die Hochstellbewegung des Frontklappenschlosses ist zumindest in einem Verstellbereich vor dem Erreichen der Schutzlage von einer Bremsund/oder Dämpfungseinrichtung abgebremst und/oder gedämpft. Dadurch soll bei einem eventuellen Einschwingen der durch das Signal von der Einrichtung in Richtung der Hochlage verstellten Frontklappe auf die Hochlage oder - falls die Hochlage von einem Anschlag begrenzt ist - eine Rückschlagbewegung der Frontklappe von dem Anschlag weg nach unten jeweils in eine Höhenlage der Frontklappe auch kurzzeitig vermieden sein, die sonst von der für ein Abfangen des Aufpralls vorgesehenen Höhenlage wesentlich nach unten abweichen könnte.

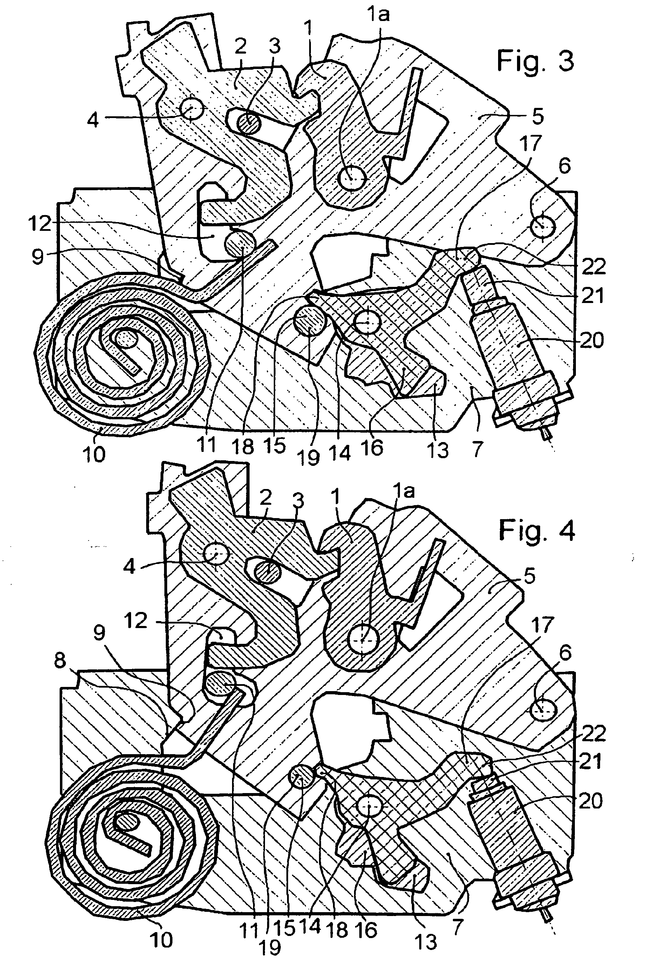

Das Frontklappenschloss weist beispielsweise eine von einer Sperrklinke 1 verriegelbare Drehfalle 2 auf, die zur Verriegelung der Frontklappe mit einem Schließbolzen 3 zusammen wirkt. Bei dem ersten Ausführungsbeispiel gemäß den Figuren 1 bis 4 ist der Schließbolzen 3 durch einen etwa horizontalen Quersteg eines U-förmigen Bügels gebildet, der an der Unterseite der Frontklappe mit nach unten gerichteten Schenkeln befestigt ist. Die Drehfalle 2 ist um eine etwa horizontale Schwenkachse 4 schwenkbar an einem Schlossträger 5 befestigt, der um eine etwa horizontale Achse 6 an der Karosserie 7 des Kraftfahrzeugs oder an einem daran abgestützten Bauteil, beispielsweise einem Lagerbock, schwenkbar ist. Die Sperrklinke 1 ist um eine Verdrehachse 1a an dem Schlossträger 5 schwenkbar befestigt. Der Schlossträger 5 ist zwischen der in Figur 1 dargestellten Normallage und der Figur 4 entsprechenden Hochlage höhenverstellbar, in der sich auch die Frontklappe in ihrer Hochlage befindet. Die Hochlage des Schlossträgers 5 und damit der Frontklappe ist durch den in Fig. 4 erkennbaren Anschlag 8 an der Karosserie 7 des Kraftfahrzeugs begrenzt, der dann mit einem Gegenanschlag 9 an dem Schlossträger 5 zusammen wirkt.

Der Schlossträger 5 ist von wenigstens einem vorgespannten Federelement 10 in die Fig. 4 entsprechende Hochlage belastet, wobei das Federelement 10 seine Federkraft nicht direkt auf den Schlossträger 5 überträgt, sondern über einen von der Achse 6 entfernt angeordneten Bolzen 11, der eine L-förmige Ausnehmung 12 im Schlossträger 5 durchsetzt, die in der Breite an den Bolzen 11 angepasst ist. Wie den Figuren 1 bis 4 zu entnehmen ist, befindet sich der Bolzen 11 in der Fig. 1 entsprechenden Normallage des Schlossträgers 5 und während dem Hochstellen in die Fig. 4 entsprechende Hochlage in einem Schenkelbereich der L-förmigen Ausnehmung 12, der etwa radial zur Achse 6 gerichtet ist. In der Fig. 4 entsprechenden Hochlage des Schlossträgers 5 befindet sich der Bolzen 11 in einem anderen Schenkelbereich der L-förmigen Ausnehmung 12, der beispielsweise etwa kreisbogenförmig um die Achse 6 ausgebildet ist.

Bei geschlossener und von dem Frontklappenschloss 1, 2, 3 verriegelter Frontklappe befindet sich der Schlossträger 5 in seiner Fig. 1 entsprechenden, von einer Verriegelungseinrichtung arretierten Normallage. Die Verriegelungseinrichtung weist bei dem ersten Ausführungsbeispiel einen Verriegelungshebel 13 auf, der zwischen der
Fig. 1 entsprechenden, bei geschlossener Frontklappe den Schlossträger 5 arretierenden Verriegelungslage und einer durch das Signal an die Einrichtung entriegelten, den Schlossträger 5 für eine Verstellbewegung in die Hochlage frei gebenden,
Fig. 2 entsprechenden Entriegelungslage um eine an der Karosserie 7 ortsfest angeordnete Drehachse 14 schwenkbar ist. Zur Verriegelung des Schlossträgers 5 in der Fig. 1 entsprechenden Normalage wirkt der Verriegelungshebel 13 mit einem am Schlossträger 5 befestigten Verriegelungsbolzen 15 zusammen und stützt sich mit einem Sperrschenkel 16 sperrend an dem Verriegelungsbolzen 15 ab.

Die Brems- und/oder Dämpfungseinrichtung weist einen um die Drehachse 14 schwenkbaren Brems- und Dämpfungshebel 17 mit einem Hebelarm 18 auf, der beim Verstellen des Schlossträgers 5 in die Fig. 4 entsprechende Hochlage vor der Hochlage wie in Fig. 3 dargestellt an einer Stützschulter 19 des Schlossträgers 5 zur Anlage kommt, die bei dem Ausführungsbeispiel durch den Verriegelungsbolzen 15 gebildet ist. Der Brems- und Dämpfungshebel 17 ist bei dem Ausführungsbeispiel durch einen einzigen Hebel gebildet. Beim weiteren Verstellen des Schlossträgers 5 und damit der Frontklappe in die Hochlage wirkt der Brems- und Dämpfungshebel 17 mit der Stützschulter 19 derart zusammen, dass an dem Schlossträger 5 eine die Bewegung des Schlossträgers 5 in die Hochlage bremsende und dämpfende Widerstandskraft bewirkt wird oder zusätzlich dabei der Brems- und/oder Dämpfungshebel 17 elastisch und/oder plastisch verformt wird. Wäre der Brems- und Dämpfungshebel 17 durch einen separaten Bremshebel und einen separaten Dämpfungshebel gebildet, würde der Bremshebel an dem Schlossträger eine Bremskraft und der Dämpfungshebel an dem Schlossträger eine Dämpfungskraft jeweils in dem angegebenen Sinn bewirken. Der Brems- und Dämpfungshebel 17 kann sich beispielsweise im Bereich seines Hebelarmes 18 elastisch oder eventuell zusätzlich plastisch verformen. Durch die von dem Brems- und Dämpfungshebel an dem Schlossträger 5 bewirkte Brems- und Dämpfungskraft können sich der Schlossträger 5 und damit die Frontklappe schneller auf die Hochlage einschwingen bzw. einstellen, wobei auch kurzzeitig ein wesentliches Unterschreiten der Hochlage durch die Frontklappe vermieden ist, wenn der Schlossträger 5 bzw. die Frontklappe die Hochlage erreicht hat oder hatte.

Ein Entriegeln des Schlossträgers 5 wird durch einen von dem Signal bzw. der Einrichtung aktivierten, beispielsweise pyrotechnischen Aktuator 20 bewirkt, der dabei explosionsartig mit einem Stößel 21 auf einen Hebelarm des Verriegelungshebels 13 und einen damit zumindest anfänglich deckungsgleichen Hebelarm 22 des Brems- und Dämpfungshebels 17 einwirkt. Der Aktuator 20 ist an der Karosserie 7 des Kraftfahrzeugs ortsfest angeordnet. Der Verriegelungshebel 13 gelangt dadurch aus dem Verstellbereich des Schlossträgers in seine Fig. 2 entsprechende Entriegelungslage, in der sich der Schlossträger 5 unter der Federkraft des vorgespannten Federelements 10 und der zumindest über eine kurze Zeitdauer wirkenden Kraft des Aktuators 20 in die Hochlage verstellen kann. Diese Hochstellbewegung wird wie zuvor angegeben über den mit der Stützschulter 19 am Schlossträger 5 zusammen wirkenden Hebelarm 18 des Brems- und Dämpfungshebels 17 abgebremst bzw. gedämpft.

Ein weiteres Abbremsen und Dämpfen der Hochstellbewegung des Schlossträgers 5 und damit der Frontklappe in die Hochlage wird dadurch bewirkt, dass beim Verstellen des Schlossträgers 5 von der Normallage in die Hochlage in einem Bereich vor der Hochlage der Brems- und Dämpfungshebel 17 mit seinem Hebelarm 22 an dem Stößel 21 des Aktuators 20 zur Anlage kommt und zumindest in einem Bereich beim weiteren Verstellen des Schlossträgers 5 in die Hochlage den aus dem Aktuator 20 heraus verstellten Stößel 21 gegen die Widerstandskraft einer Restgasmenge in dem Aktuator 20 in den Aktuator 20 hinein drückt und dabei die Restgasmenge komprimiert.

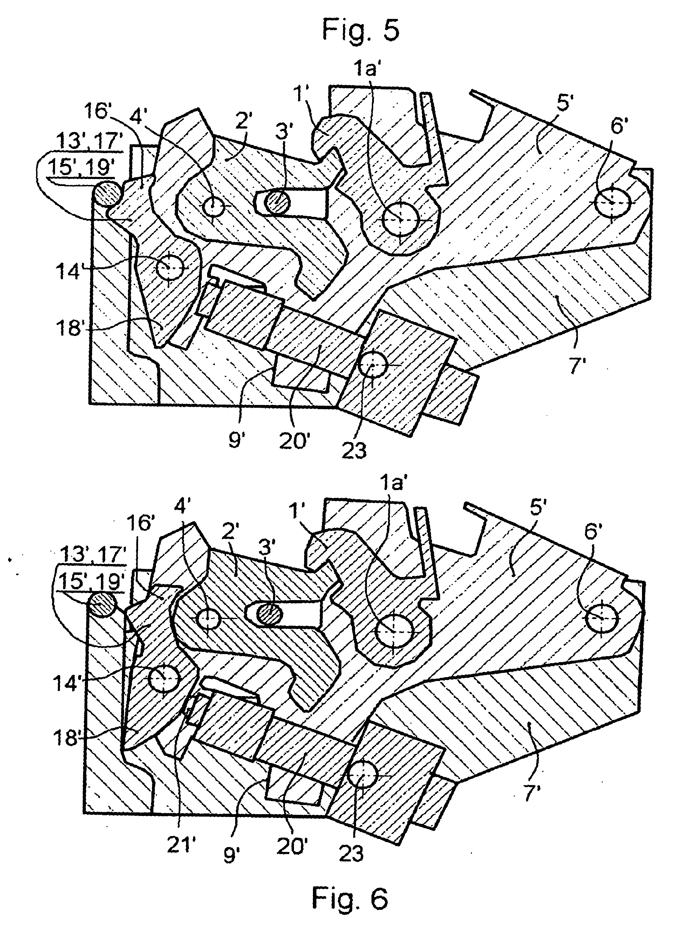

Ein zweites, in den Figuren 5 bis 9 dargestelltes Ausführungsbeispiel einer Fußgängerschutzeinrichtung stimmt weitgehend bis auf die nachfolgend beschriebenen Unterschiede mit dem ersten Ausführungsbeispiel überein. Zur Vermeidung einer wiederholten Beschreibung gleicher oder vergleichbarer Bauteile sind diese mit einer gleichen Bezugszahl und zur besseren Unterscheidung bei dem zweiten Ausführungsbeispiel mit einem hochgestellten Zeichen versehen. Bei dem zweiten Ausführungsbeispiel bildet der Verriegelungshebel 13' auch den Brems- und Dämpfungshebel 17', so dass der Verriegelungshebel 13' und der Brems- und Dämpfungshebel 17' durch einen einzigen Hebel gebildet ist, an dem der mit dem Verriegelungsbolzen 15' zusammen wirkende Sperrschenkel 16' ausgebildet ist und der mit der Stützschulter 19' zusammen wirkende Hebelarm 18' ausgebildet sind. Der Verriegelungsbolzen 15' und die Stützschulter 19' sind durch dasselbe Bauteil, bei dem Ausführungsbeispiel durch einen gemeinsamen Bolzen gebildet.

Bei dem zweiten Ausführungsbeispiel gemäß den Figuren 5 bis 9 ist der gemeinsame Verriegelungshebel 13' und Brems- und Dämpfungshebel 17' um eine Drehachse 14' an dem Schlossträger 5' schwenkbar. Der bei diesem Ausführungsbeispiel pyrotechnisch wirkende Aktuator 20' ist um eine Kippachse 23 schwenkbar an der Karosserie 7' des Kraftfahrzeugs angeordnet. Der Aktuator 20' wird beim Hochstellen des Schlossträgers 5' in die Hochlage über eine nicht dargestellte Winkelverstelleinrichtung derart winkelmäßig verstellt, dass sich sein Stößel 21' in einer jeweils günstigen Lage, beispielsweise in einem etwa gleichbleibenden Abstand zur Drehachse 14' des durch den Verriegelungshebel 13' und den Brems- und Dämpfungshebel 17' gemeinsam gebildeten Hebels befindet.

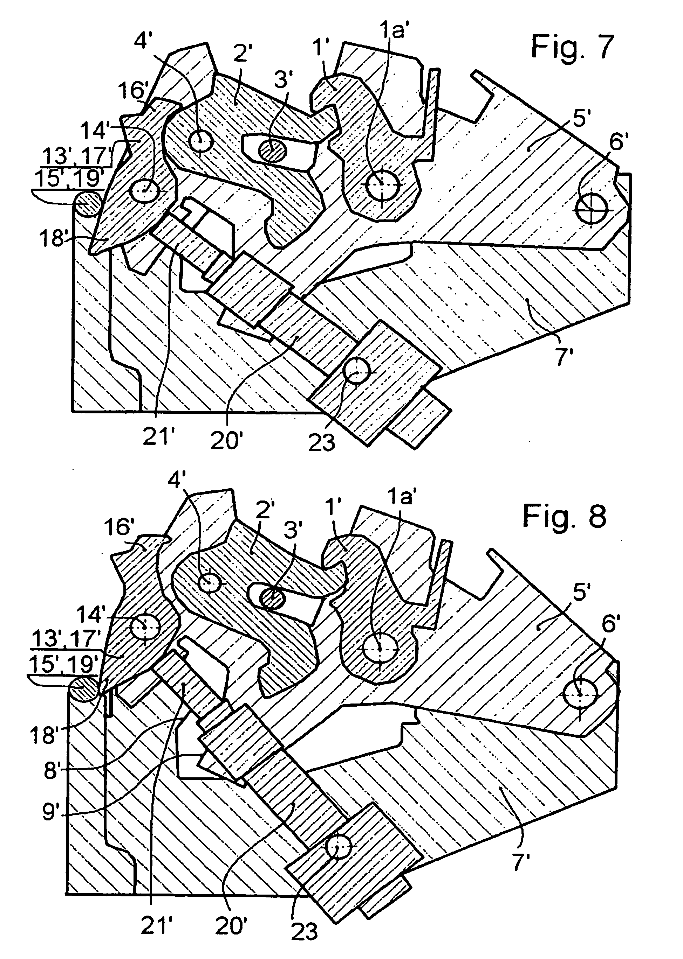

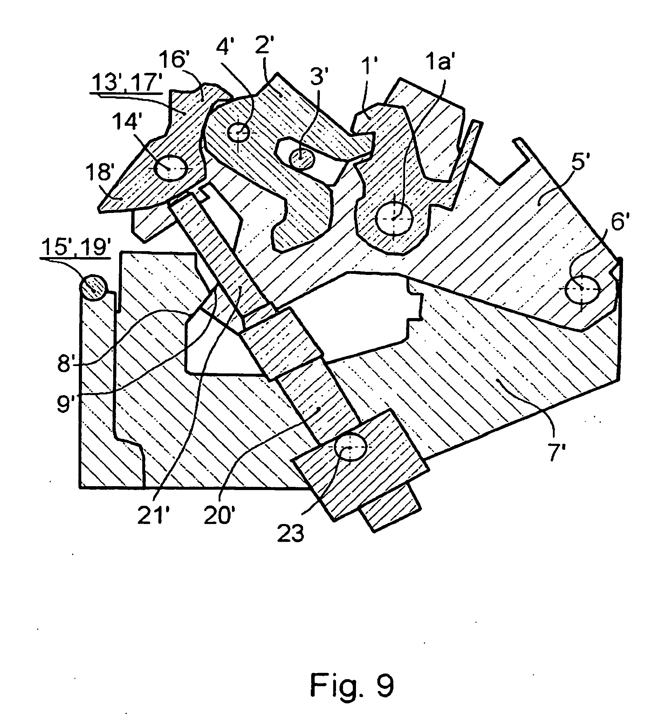

In Fig. 5 befindet sich die dem zweiten Ausführungsbeispiel entsprechende Einrichtung der Fußgängerschutzeinrichtung in ihrer Normallage, in der die geschlossene Frontklappe von dem Frontklappenschloss 1', 2', 3' und der Schlossträger 5' von dem mit dem Verriegelungsbolzen 15' zusammen wirkenden Verriegelungshebel 13' verriegelt sind. Ein Entriegeln des Schlossträgers 5' wird durch den von dem Signal bzw. der Einrichtung aktivierten, beispielsweise hydraulisch wirkenden Aktuator 20' bewirkt, der dabei mit einem Stößel 21' auf einen Hebelarm 18' des Verriegelungshebels 13' einwirkt, wodurch der Verriegelungshebel 13' in die in Fig. 6 dargestellte Entriegelungslage gelangt und der Schlossträger in Richtung seiner Hochlage angehoben wird. Über den weiter wirksamen Stößel 21' wird der Schlossträger 5' weiter in Richtung der Hochlage in die in Fig. 7 und danach in die in Fig. 8 angehobenen Positionen verstellt, wobei der auch einen Brems- und Dämpfungshebel 17' bildende Verriegelungshebel 13' mit der Stützschulter 19' zusammen wirkend an dem Schlossträger 5' eine Brems- und Dämpfkraft bewirkt, wobei sich eventuell der Brems- und Dämpfungshebels 17' beispielsweise im Bereich des Hebelarmes 18' elastisch und/oder plastisch verformt. Durch die am Schlossträger 5' wirkende Brems- und Dämpfkraft schwingen der Schlossträger 5' und die Frontklappe schneller auf die Hochlage ein, wobei ein auch kurzzeitiges wesentliches Unterschwingen der in Fig. 9 dargestellten Hochlage vermieden ist. Die Hochlage ist von einem Anschlag 8' an der Karosserie 7' begrenzt, der mit einem Gegenanschlag 9' an dem Schlossträger 5' zusammen wirkt.

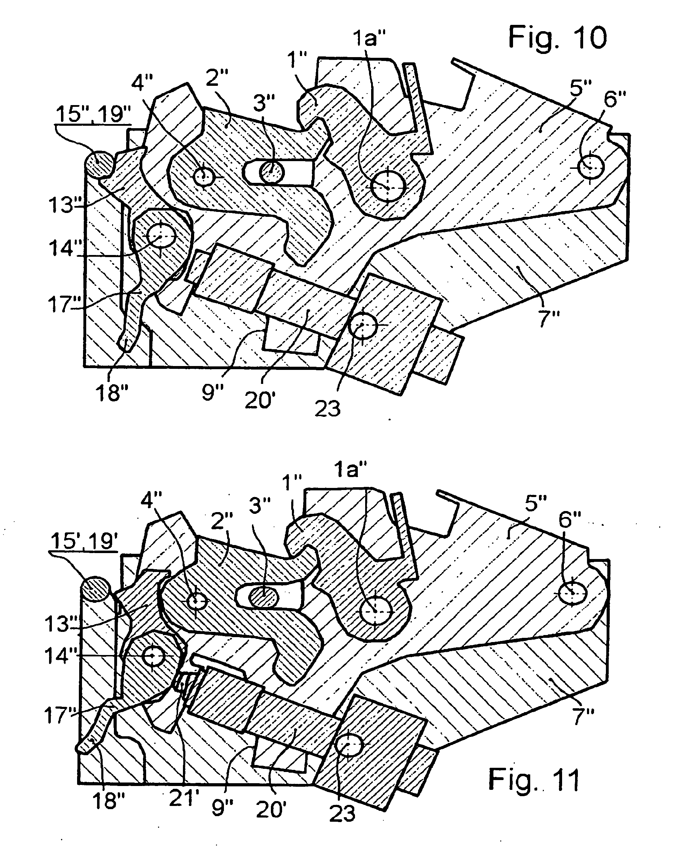

Ein drittes, in den Figuren 10 bis 13 dargestelltes Ausführungsbeispiel einer Fußgängerschutzeinrichtung stimmt weitgehend bis auf die nachfolgend beschriebenen Unterschiede teilweise mit dem ersten und teilweise mit dem zweiten Ausführungsbeispiel überein. Zur Vermeidung einer wiederholten Beschreibung von bei den Ausführungsbeispielen gleichen oder vergleichbaren Bauteilen sind diese mit einer gleichen Bezugszahl und zur besseren Unterscheidung auch bei dem dritten Ausführungsbeispiel mit einem zugeordneten hochgestellten Zeichen versehen. Bei dem dritten Ausführungsbeispiel sind ähnlich wie bei dem ersten Ausführungsbeispiel ein Verriegelungshebel 13" und ein einziger separater Brems- und Dämpfungshebel 17" verwendet, die um eine gemeinsame Drehachse 14" schwenkbar sind, die jedoch im Gegensatz zu dem ersten Ausführungsbeispiel an dem Schlossträger 5" ausgebildet ist.

Der bei dem dritten Ausführungsbeispiel wie bei dem zweiten Ausführungsbeispiel pyrotechnisch wirkende Aktuator 20' ist um die Kippachse 23 schwenkbar an der Karosserie 7" des Kraftfahrzeugs angeordnet. Der Aktuator 20' wird wie bei dem zweiten Ausführungsbeispiel beim Hochstellen des Schlossträgers 5" in die Hochlage über eine nicht dargestellte Winkelverstelleinrichtung derart winkelmäßig verstellt, dass sich sein Stößel 21' in einer jeweils günstigen Lage, beispielsweise in einem etwa gleichbleibenden Abstand zur gemeinsamen Drehachse 14" des Verriegelungshebel 13" und des Brems- und Dämpfungshebel 17" befindet.

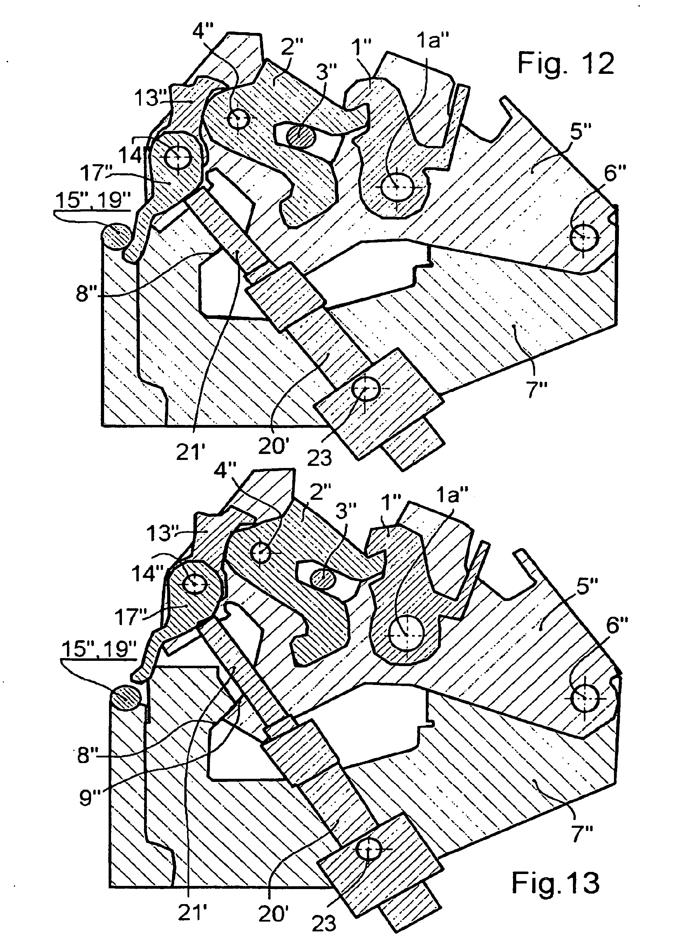

In Fig. 10 befindet sich die dem dritten Ausführungsbeispiel entsprechende Einrichtung der Fußgängerschutzeinrichtung in ihrer Normallage, in der die geschlossene Frontklappe von dem Frontklappenschloss 1", 2", 3" und der Schlossträger 5" von dem mit dem Verriegelungsbolzen 15" zusammen wirkenden Verriegelungshebel 13" verriegelt sind. Ein Entriegeln des Schlossträgers 5" wird durch den von dem Signal bzw. der Einrichtung aktivierten, beispielsweise pyrotechnisch wirkenden Aktuator 20' bewirkt, der dabei mit einem Stößel 21' auf einen Hebelarm des Verriegelungshebels 13" einwirkt, wodurch der Verriegelungshebel 13" in die in Fig. 11 dargestellte Entriegelungslage gelangt und durch die Kraft des Aktuators 20' und eventuell eines vorgespannten Federelements der Schlossträger 5" in Richtung seiner Hochlage angehoben wird. Über den weiter wirksamen Stößel 21' wird der Schlossträger 5" weiter in Richtung der Hochlage in die in Fig. 12 angehobene Position verstellt, wobei der Brems- und Dämpfungshebel 17" mit der karosseriefesten Stützschulter 19" zusammen wirkend an dem Schlossträger 5" eine Brems- und Dämpfkraft bewirkt. Dabei kann sich eventuell der Brems- und Dämpfungshebels 17" beispielsweise im Bereich des Hebelarmes 18" elastisch und/oder plastisch verformen. Durch die vom Brems- und Dämpfungshebel 17" im Zusammenwirken mit der Stützschulter 19" im Bereich der Drehachse 14" am Schlossträger 5" bewirkte Bremsund Dämpfkraft schwingen der Schlossträger 5" und die Frontklappe schneller auf die in Fig. 13 dargestellte Hochlage ein. Dabei wird ein auch kurzzeitiges wesentliches Unterschwingen der Hochlage beispielsweise nach einem Abprall von einem an der Karosserie 7" ausgebildeten Anschlag 8" vermieden, der mit einem Gegenanschlag 9" an dem Schlossträger 5" zusammen wirkend die Fig. 13 entsprechende Hochlage begrenzt. In der Hochlage hintergreift der Brems- und Dämpfungshebel 17" die Stützschulter 19" am Schlossträger 5", wodurch der Brems- und Dämpfungshebel 17" mit der Stützschulter 19" zusammen wirkend ein Rückstellen des Schlossträgers 5" in seine Normallage nach unten verhindern kann. Es ist jedoch auch möglich, dass bei einem Aufprall beispielsweise eines Fußgängers auf die in die Hochlage hochgestellte Frontklappe der Brems- und Dämpfungshebel 17" mit der Stützschulter 19" zusammen wirkend von der Stützschulter 19" derart beispielsweise unter einer elastischen und/oder plastischen Verformung abgelenkt wird, dass sich der Schlossträger 5" in seine Normallage nach unten verstellen lässt und dabei der Brems- und Dämpfungshebel 17" eine den Aufprall des Fußgängers abfedernde bzw. abdämpfende Energie aufnimmt. Falls der Brems- und Dämpfungshebel 17" durch einen separaten Bremshebel und/oder einen separaten Dämpfungshebel gebildet ist, kann der Bremshebel und/oder Dämpfungshebel bei einem Aufprall beispielsweise eines Fußgängers auf die in die Hochlage hochgestellte Frontklappe elastisch und/oder plastisch verformt werden und dadurch den Aufprall des Fußgängers abfedern oder dämpfen.

Die Erfindung kann auch von den Ausführungsbeispielen abweichend ausgeführt werden. Der wenigstens eine Sensor, der einen Zusammenstoß eines Objekts mit dem Kraftfahrzeug erfassen kann, kann auch lediglich einen Zusammenstoß eines Fußgängers mit dem Kraftfahrzeug erfassen. Die Frontklappe bleibt beim Hochstellen in die Hochlage in allen Fällen von wenigstens einem Frontklappenschloss verriegelt, das beliebig gebildet und von der Einrichtung in beliebiger Weise in die Hochlage hochstellbar sein kann. Hierzu kann ein beliebig gebildeter Schlossträger über eine beliebige Kinematik im Wesentlichen höhenverstellbar oder zusätzlich in Fahrzeuglängs- und/oder Fahrzeugquerrichtung verstellbar angeordnet sein. Die in der Normallage eine Verriegelung des Schlossträgers bewirkende Verriegelungseinrichtung und die Brems- und/oder Dämpfungseinrichtung können auch von den Ausführungsbeispielen abweichend auf andere Weise gebildet sein. Bei dem ersten Ausführungsbeispiel ist der Brems- und Dämpfungshebel durch einen einzigen Hebel gebildet. Ebenso könnte der Brems- und Dämpfungshebel durch einen separaten Bremshebel und einen separaten Dämpfungshebel oder nur durch einen Bremshebel oder einen Dämpfungshebel gebildet sein. Die bei geschlossener und von einem Frontklappenschloss verriegelter Frontklappe den Schlossträger in seiner Normallage festhaltende Verriegelungseinrichtung kann auch anders beispielsweise ohne einen Verriegelungshebel gebildet sein. Bei Verwendung eines Verriegelungshebels kann dieser wie bei dem ersten und dritten Ausführungsbeispiel durch einen separaten Verriegelungshebel oder wie bei dem zweiten Ausführungsbeispiel durch einen Hebel gebildet sein, der zusammen mit dem Brems- und Dämpfungshebel einen einzigen gemeinsamen Hebel bildet. Falls der Brems- und Dämpfungshebel nicht durch ein gemeinsames Hebelteil sondern durch einen separaten Bremshebel und einen zweiten separaten Dämpfungshebel oder lediglich durch einen Bremshebel oder Dämpfungshebel gebildet ist, kann der angegebene Verriegelungshebel mit dem separaten Bremshebel oder separaten Dämpfungshebel vereinigt bzw. durch ein einziges, gemeinsames Bauteil gebildet sein. Bei den Ausführungsbeispielen ist zur Verriegelung der Frontklappe ein an der Unterseite der Frontklappe befestigter Schließbolzen verwendet, der mit einer von einer Sperrklinke verriegelbaren Drehfalle zusammen wirkt. Der Schließbolzen oder ein vergleichbares Schlossteil könnte auch an der Karosserie des Fahrzeugs und die mit dem Schließbolzen zusammen wirkenden Schlossteile an der Frontklappe befestigt sein. Es ist nicht erforderlich, dass die Hochlage des Schlossträgers von einem Anschlag begrenzt ist. Es ist nicht erforderlich, dass der Schlossträger von einem vorgespannten Federelement in die Hochlage belastet ist, beispielsweise wenn der Aktuator oder ein vergleichbares Bauteil ein Hochstellen des Schlossträgers in die Hochlage bewirken kann. Selbstverständlich kann in jedem Fall ein das Hochstellen des Schlossträgers in die Hochlage unterstützendes und/oder bewirkendes Federelement vorgesehen sein. Der Aktuator kann ein beliebiger, beispielsweise pyrotechnisch, hydraulisch, pneumatisch oder elektromotorisch wirkender Aktuator sein. Ein Aktuator kann auch entfallen, beispielsweise wenn wenigstens ein den Schlossträger in die Hochlage belastendes Federelement verwendet ist.

## Patentansprüche

1. Fußgängerschutzeinrichtung an der Frontklappe eines Kraftfahrzeugs, mit einem Sensor, der einen Zusammenstoß eines Objekts mit dem Kraftfahrzeug erfassen kann und dann ein Signal an eine Einrichtung weiter leitet, die den hinteren und/oder vorderen Bereich der Frontklappe nach oben in eine Schutzlage ausstellt, in der die Frontklappe in vertikaler Richtung nach unten elastisch und/oder gedämpft abgestützt ist, wobei die Frontklappe in ihrer Schließlage und beim Hochstellen in die Schutzlage von wenigstens einem Frontklappenschloss (1, 2, 3 bzw. 1', 2', 3' bzw. 1 ", 2", 3") verriegelt ist, mit einer Brems- und/oder Dämpfungseinrichtung, **dadurch gekennzeichnet, dass** die Bewegung der Frontklappe in die Schutzlage zumindest in einem Verstellbereich vor oder bei dem Erreichen der Schutzlage von der Bremsund/oder Dämpfungseinrichtung (17, 19 bzw. 17', 19' bzw. 17", 19") abgebremst bzw. gedämpft ist, die einen schwenkbaren Brems- und/oder Dämpfungshebel (17, 17', 17") mit wenigstens einem Hebelarm (18, 18', 18") aufweist, der beim Verstellen des Schlossträgers (5, 5', 5") in eine Hochlage an einer Stützschulter (19, 19', 19") zur Anlage kommt und beim weiteren Verstellen des Schlossträgers (5, 5', 5") in die Hochlage mit der Stützschulter (19, 19', 19") zusammen wirkend an dem Schlossträger (5, 5', 5") eine die Bewegung des Schlossträgers (5, 5', 5") in die Hochlage bremsende bzw. dämpfende Widerstandskraft bewirkt.

2. Fußgängerschutzeinrichtung nach Anspruch 1, **dadurch gekennzeichnet, dass** das Frontklappenschloss eine von einer Sperrklinke (1, 1', 1 ") verriegelbare Drehfalle (2, 2', 2") aufweist, die zur Verriegelung der Frontklappe mit einem Schließbolzen (3, 3', 3") zusammen wirkt.

3. Fußgängerschutzeinrichtung nach Anspruch 2, **dadurch gekennzeichnet, dass** der Schließbolzen (3, 3', 3") mit der Unterseite der Frontklappe verbunden ist und die anderen Bauteile (1, 2 bzw. 1', 2' bzw. 1 ", 2") des Frontklappenschlosses an einem zwischen einer Normallage und einer Hochlage höhenverstellbaren Schlossträger (5, 5', 5") der Einrichtung angeordnet sind.

4. Fußgängerschutzeinrichtung nach Anspruch 3, **dadurch gekennzeichnet, dass** die Hochlage des Schlossträgers (5, 5', 5") von einem Anschlag (8, 8'. 8") begrenzt ist.

5. Fußgängerschutzeinrichtung nach Anspruch 3 oder 4, **dadurch gekennzeichnet, dass** sich der Schlossträger (5, 5', 5") bei geschlossener und von dem Frontklappenschloss (1, 2, 3 bzw. 1', 2', 3' bzw. 1", 2", 3") verriegelter Frontklappe in seiner von einer Verriegelungseinrichtung (13, 19 bzw. 13', 19' bzw. 13", 19") arretierten Normallage befindet, oder zusätzlich der Schlossträger (5) von wenigstens einem vorgespannten Federelement (10) in seine Hochlage belastet ist.

6. Fußgängerschutzeinrichtung nach Anspruch 5, **dadurch gekennzeichnet, dass** die Verriegelungseinrichtung einen Verriegelungshebel (13, 13', 13") aufweist, der zwischen einer bei geschlossener Frontklappe den Schlossträger (5, 5', 5") arretierenden Verriegelungslage und einer durch das Signal an die Einrichtung entriegelten, den Schlossträger (5, 5', 5") für eine Verstellbewegung in die Hochlage frei gebenden Entriegelungslage verstellbar ist, und beim Verstellen des entriegelten Schlossträgers (5, 5', 5") von der Normallage in die Hochlage der Schließbolzen (3, 3', 3") von dem Frontklappenschloss (1, 2 bzw. 1', 2' bzw. 1", 2") verriegelt ist bzw. bleibt.

7. Fußgängerschutzeinrichtung nach einem der Ansprüche 1 bis 6, **dadurch gekennzeichnet, dass** bei einer bremsenden und/oder dämpfenden Widerstandskraft der Brems- und/oder Dämpfungshebel (17, 17', 17") elastisch und/oder plastisch verformt wird.

8. Fußgängerschutzeinrichtung nach Anspruch 7, **dadurch gekennzeichnet, dass** der Brems- und/oder Dämpfungshebel (17, 17',17") um eine Drehachse (14, 14', 14") an der Karosserie (7) des Kraftfahrzeugs oder an dem Schlossträger (5', 5") schwenkbar ist und die Stützschulter (19, 19', 19") an dem anderen Teil, an dem Schlossträger oder an der Karosserie (7, 7', 7") des Kraftfahrzeugs angeordnet ist.

9. Fußgängerschutzeinrichtung nach einem der Ansprüche 3 bis 8, **dadurch gekennzeichnet, dass** ein Verstellen des entriegelten Schlossträgers (5, 5', 5") in die Hochlage durch einen von dem Signal bzw. der Einrichtung aktivierten Aktuator (20, 20', 20") bewirkt oder beschleunigt ist.

10. Fußgängerschutzeinrichtung nach Anspruch 9, **dadurch gekennzeichnet, dass** der aktivierte Aktuator (20, 20', 20") den Schlossträger (5, 5', 5") von der Verriegelungseinrichtung (13, 19 bzw. 13', 19' bzw. 13", 19") entriegelt, oder zusätzlich hierzu bei Verwendung des Verriegelungshebels (13, 13', 13") den Verriegelungshebel (13, 13', 13") aus dem Verstellbereich des Schlossträgers (5, 5', 5") bzw. einer am Schlossträger (5, 5', 5") ausgebildeten und mit dem Verriegelungshebel (13, 13', 13") zusammen wirkenden Stützschulter (19, 19', 19") verstellt.

11. Fußgängerschutzeinrichtung nach Anspruch 9 oder 10, **dadurch gekennzeichnet, dass** beim Verstellen des Schlossträgers (5) von der Normallage in die Hochlage in einem Bereich vor der Hochlage der Verriegelungshebel und/oder der Brems- und/oder Dämpfungshebel (17) an dem verstellbaren Teil (21) des Aktuators (20), dem Zylinder oder der im Zylinder axial verstellbaren Kolbenstange (21) jeweils des Aktuators (20) zur Anlage kommt und beim weiteren Verstellen des Schlossträgers (5) in die Hochlage das verstellbare Teil (21) des Aktuators (20) in den Zylinder des Aktuators (20) drückt und dabei das im Arbeitsraum des Aktuators (20) befindliche Gas komprimiert, wodurch an dem Schlossträger (5) eine die Verstellbewegung des Schlossträgers (5) in die Hochlage verlangsamende Widerstandskraft bewirkt wird.

12. Fußgängerschutzeinrichtung nach einem der Ansprüche 7 bis 11, **dadurch gekennzeichnet, dass** der Verriegelungshebel (13) der Brems- und/oder Dämpfungshebel (17) ist, oder zusätzlich der Brems- und/oder Dämpfungshebel (17) durch einen einzigen Hebel (17) oder durch einen Bremshebel und einen Dämpfungshebel gebildet ist.

13. Fußgängerschutzeinrichtung nach einem der Ansprüche 7 bis 12, **dadurch gekennzeichnet, dass** in der Hochlage der Frontklappe und des Schlossträgers (5") der Brems- und/oder Dämpfungshebel (17") die Stützschulter (19") am Schlossträger (5") hintergreift, wodurch der Brems- und/oder Dämpfungshebel (17") mit der Stützschulter (19") zusammen wirkend ein Rückstellen des Schlossträgers (5") in seine Normallage nach unten verhindert, oder bei einem Aufprall beispielsweise eines Fußgängers auf die in die Hochlage hochgestellte Frontklappe der Brems- und/oder Dämpfungshebel (17") mit der Stützschulter (19") zusammen wirkend von der Stützschulter (19") derart unter einer elastischen und/oder plastischen Verformung abgelenkt wird, dass sich der ebenfalls in die Hochlage hochgestellte Schlossträger (5") in seine Normallage nach unten verstellen lässt und dabei der Brems- und/oder Dämpfungshebel (17") eine den Aufprall des Fußgängers abfedernde bzw. abdämpfende Energie aufnimmt.

## Claims

1. A pedestrian-protecting device on the bonnet of a motor vehicle, comprising a sensor for detecting a collision between the vehicle and an object and subsequently delivering a signal to a device which moves the rear and/or front region of the bonnet upwards into a protective position in which the bonnet is supported resiliently and/or with shock absorption in the vertical direction from beneath, wherein the bonnet is secured by at least one lock (1,2,3 or 1',2',3' or 1", 2", 3") when closed or when raised to the protective position, comprising a braking and/or damping device, **characterised in that** the movement of the bonnet into the protective position, at least before or on reaching the protective position, is braked or damped by the braking and/or damping device (17, 19 or 17', 19' or 17" , 19"), the device comprising a pivotable braking and or damping lever (17, 17', 17") with at least one lever arm (18, 18', 18") which, when a lock holder (5, 5', 5") is moved into a high position, comes against and abuts a protective shoulder (19, 19', 19") and, when the lock holder (5, 5', 5") moves further forward into the high position, co-operates with the shoulder (19, 19', 19") and exerts a resistant force on the lock holder (5, 5', 5") which brakes or damps the movement of the lock holder (5, 5', 5") into the high position.

2. A pedestrian-protecting device according to claim 1, **characterised in that** the bonnet lock comprises a rotatable pawl (2, 2', 2 ") lockable by a latch (1, 1', 1") and co-operating with a pin (3, 3', 3") in order to lock the bonnet.

3. A pedestrian-protecting device according to claim 2, **characterised in that** the pin (3, 3', 3") is connected to the underside of the bonnet and the other components (1, 2 or 1', 2' or 1", 2") of the bonnet lock are disposed on a lock holder (5, 5', 5") belonging to the device and vertically adjustable between a normal position and a high position.

4. A pedestrian-protecting device according to claim 3, **characterised in that** the high position of the lock holder (5, 5', 5") is limited by a stop (8, 8', 8").

5. A pedestrian-protecting device according to claim 3 or claim 4, **characterised in that** when the bonnet is closed and secured by the lock (1, 2, 3, or 1', 2', 3' or 1" , 2", 3") the lock holder (5, 5', 5") is in its normal position locked by a device (13, 19 or 13', 19' or 13", 19") or additionally the lock holder (5) is biased into its high position by at least one prestressed spring element(10).

6. A pedestrian-protecting device according to claim 5, **characterised in that** the locking device comprises a lever (13, 13', 13") which is adjustable between a locked position which locks the lock holder (5, 5', 5") when the bonnet is closed and an unlocked position which, when released by the signal to the device, releases the lock holder (5, 5', 5") so as it can move into the high position and when the unlocked lock holder (5, 5', 5") is moved from the normal position into the high position, the pin (3, 3', 3") is or remains locked by the bonnet lock (1, 2 or 1', 2' or 1", 2").

7. A pedestrian-protecting device according to any of claims 1 to 6, **characterised in that** in the event of a braking and/or damping resisting force the braking and/or damping lever (17, 17', 17") is elastically and/or plastically deformed.

8. A pedestrian-protecting device according to claim 7, **characterised in that** the braking and/or damping lever (17, 17', 17") is pivotable around an axis (14, 14', 14") on the body (7) of the vehicle or on the lock holder (5', 5") and the shoulder (19, 19', 19") is disposed on the other part or on the lock holder or on the body (7, 7', 7") of the vehicle.

9. A pedestrian-protecting device according to any of claims 3 to 8, **characterised in that** the lock holder (5, 5', 5"), when unlocked, is moved or accelerated into the high position by an actuator (20, 20', 20") activated by the signal or by the device.

10. A pedestrian-protecting device according to claim 9, **characterised in that** the activated actuator (20, 20', 20") unlocks the lock holder (5, 5', 5") from the locking device (13, 19 or 13', 19' or 13", 19") or additionally, when the lever (13, 13', 13") is used, moves the lever (13, 13', 13") out of the adjustment range of the lock holder (5, 5', 5") or of a shoulder (19, 19',19") formed on the lock holder (5, 5', 5") and co-operating with the locking lever (13, 13', 13").

11. A pedestrian-protecting device according to claim 9 or claim 10, **characterised in that** when the lock holder (5) is moved from the normal position into the high position, before reaching the high position, the locking lever and/or the braking and/or damping lever (17) abuts against the adjustable part (21) of the actuator (20) or against the cylinder or against the piston rod (21) of the actuator (20) axially adjustable in the cylinder and when the lock holder (5) moves further into the high position, the adjustable part (21) of the actuator (20) presses into the cylinder of the actuator (20) and compresses the gas in the working chamber of the actuator (20), thus producing a force on the lock holder (5) which delays the motion of the lock holder (5) into the high position when adjusted.

12. A pedestrian-protecting device according to any of claims 7 to 11, **characterised in that** the locking lever (13) is the braking and/or damping lever (17) or additionally the braking and/or damping lever (17) is in the form of a single lever (17) or a braking lever and a damping lever.

13. A pedestrian-protecting device according to any of claims 7 to 12, **characterised in that** when the bonnet and the lock holder (5") of the braking and/or damping lever (17") are in the high position, the shoulder (19") engages behind the lock holder (5"), with the result that the braking and/or damping lever (17") co-operates with the shoulder (19") and prevents the lock holder (5") from being moved back downwards into its normal position, or in the event of a collision, e.g. between a pedestrian and the bonnet when raised into the high position, the braking and/or damping lever (17") co-operates with the shoulder (19") and is so moved by the shoulder (19") with elastic and/or plastic deformation that the lock holder (5"), likewise raised into the high position, can be moved downwards into its normal position and the braking and/or damping lever (17") absorbs energy which cushions or damps the impact on the pedestrian.

## Revendications

1. Installation de protection de piétons au capot d'un véhicule automobile comprenant, un capteur qui détecte la collision du véhicule avec un objet et transmet un signal à une installation déployant la zone arrière et/ou avant du capot, vers le haut dans une position de protection dans laquelle le capot est appuyé vers le bas dans la direction verticale, élastiquement et/ou de manière amortie,
- le capot étant verrouillé par au moins une serrure de capot (1, 2, 3, 1', 2', 3', 1", 2", 3") dans sa position de fermeture et lors de son relèvement dans la position de protection, par une installation de freinage et/ou d'amortissement,
installation **caractérisée en ce que**
son mouvement vers la position de protection est freiné ou amorti au moins dans une plage de déplacement avant ou lorsqu'il atteint la position de protection, par l'installation de freinage et/ou d'amortissement (17, 19, 17', 19', 17", 19"), cette installation ayant un levier de freinage et/ou d'amortissement (17, 17', 17"), pivotant, avec au moins un bras de levier (18, 18', 18") qui, lors du déplacement d'un support de serrure (5, 5', 5"), vient en appui contre un épaulement d'appui (19, 19', 19") en position haute et qui, pour la poursuite du déplacement du support de serrure (5, 5', 5") en position haute, en coopérant avec l'épaulement d'appui (19, 19', 19"), exerce sur le support de serrure (5, 5', 5"), une force résistante qui freine ou amortit le mouvement du support de serrure (5, 5', 5") vers la position haute.

2. Installation de protection de piétons selon la revendication 1, **caractérisée en ce que**
la serrure de capot comporte un loquet tournant (2, 2', 2"), verrouillable par un verrou (1, 1', 1") coopérant avec un goujon de fermeture (3, 3', 3") pour verrouiller le capot.

3. Installation de protection de piétons selon la revendication 2, **caractérisée en ce que**
le goujon de fermeture (3, 3', 3") est relié au côté inférieur du capot et les autres composants (1, 2, 1', 2', 1 ", 2") de la serrure de capot, sont montés sur un support de serrure (5, 5', 5") de l'installation, réglable en hauteur entre une position normale et une position haute.

4. Installation de protection de piétons selon la revendication 3, **caractérisée en ce que**
la position haute du support de serrure (5, 5', 5") est délimitée par une butée (8, 8', 8").

5. Installation de protection de piétons selon la revendication 3 ou 4, **caractérisée en ce que**
pour la position fermée du capot, verrouillée par la serrure de capot (1, 2, 3, 1', 2', 3', 1", 2", 3"), le support de serrure (5, 5', 5") est bloqué dans sa position normale par l'installation de verrouillage (13, 19, 13', 19', 13", 19") ou en plus le support de serrure (5) est poussé vers sa position haute par au moins un élément de ressort précontraint (10).

6. Installation de protection de piétons selon la revendication 5, **caractérisée en ce que**
l'installation de verrouillage comporte un levier de verrouillage (13, 13', 13") réglable entre une position de verrouillage bloquant le support de serrure (5, 5', 5") lorsque le capot est fermé et une position de déverrouillage libérant le mouvement vers la position haute du support de serrure (5, 5', 5") par le signal appliqué à l'installation et lors du déplacement du support de serrure déverrouillé (5, 5', 5") de sa position normale à la position haute, le goujon de fermeture (3, 3', 3") est verrouillé ou reste verrouillé par la serrure de capot (1, 2, 1', 2', 1", 2").

7. Installation de protection de piétons selon l'une des revendications 1 à 6,
**caractérisée en ce que**
pour une force résistante de freinage et/ou d'amortissement, le levier de freinage et/ou d'amortissement (17, 17', 17") est déformé élastiquement et/ou plastiquement.

8. Installation de protection de piétons selon la revendication 7, **caractérisée en ce que**
le levier de freinage et/ou d'amortissement (17, 17', 17"), pivote autour d'un axe de rotation (14, 14', 14") de la carrosserie (7) du véhicule ou sur le support de serrure (5', 5") et l'épaulement d'appui (19, 19', 19") est monté sur l'autre partie, sur le support de serrure ou la carrosserie (7, 7', 7") du véhicule automobile.

9. Installation de protection de piétons selon l'une des revendications 3 à 8,
**caractérisée en ce que**
le déplacement du support de serrure (5, 5', 5") déverrouillé vers la position haute est produit ou est accéléré par un actionneur (20, 20', 20") activé par le signal ou l'installation.

10. Installation de protection de piétons selon la revendication 9, **caractérisée en ce que**
l'actionneur (20, 20', 20") actionné déverrouille le support de serrure (5, 5', 5") de l'installation de verrouillage (13, 19, 13', 19', 13", 19") ou en plus si on utilise le levier de verrouillage (13, 13', 13"), il déplace le levier de verrouillage (13, 13', 13") hors de la plage de réglage du support de serrure (5, 5', 5") ou de l'épaulement d'appui (19, 19', 19") réalisé sur le support de serrure (5, 5', 5") ou coopérant avec le levier de verrouillage (13, 13', 13").

11. Installation de protection de piétons selon la revendication 9 ou 10, **caractérisée en ce que**
lorsque le support de serrure (5) est déplacée de sa position normale à sa position haute, dans une zone en amont de la position haute, le levier de verrouillage et/ou le levier de freinage et/ou d'amortissement (17) arrivent en appui contre la partie réglable (21) de l'actionneur (20), le cylindre ou la tige de piston (21) déplacée axialement dans le cylindre de l'actionneur (20), et
lors de la poursuite de déplacement du support de serrure (5) vers la position haute, la partie réglable (21) de l'actionneur (20) pousse dans le cylindre de l'actionneur (20) et comprime ainsi le gaz dans la chambre de travail de l'actionneur (20) produisant une force résistante ralentissant le mouvement de déplacement du support de serrure (5) vers la position haute.

12. Installation de protection de piétons selon l'une des revendications 7 à 11,
**caractérisée en ce que**
le levier de verrouillage (13) est le levier de freinage et/ou le levier d'amortissement (17) ou en plus le levier de freinage et/ou d'amortissement (17) est réalisé par un unique levier (17) ou par un levier de freinage et un levier d'amortissement.

13. Installation de protection de piétons selon l'une des revendications 7 à 12,
**caractérisée en ce que**
lorsque le capot est en position haute et le support de serrure (5") du levier de freinage et/ou d'amortissement (17") vient prendre par derrière l'épaulement d'appui (19") du support de serrure (5"), le levier de freinage et/ou d'amortissement (17") coopérant avec l'épaulement d'appui (19"), interdit un rappel du support de serrure (5") vers le bas dans sa position normale ou par exemple si un piéton rebondit sur le capot relevé en position haute, le levier de freinage et/ou d'amortissement (17") coopérant avec l'épaulement d'appui (19"), est dévié vers le bas avec déformation élastique et/ou plastique en coopérant avec l'épaulement d'appui (19") de façon que le support de serrure (5") également relevé en position haute, puisse descendre dans sa position normale et que le levier de freinage et/ou d'amortissement (17") absorbe ainsi de l'énergie qu'il reçoit ou absorbe le choc du piéton.
